# EUROPÄISCHE PATENTANMELDUNG

(11) **EP 2 650 445 A2**
(43) Veröffentlichungstag der Anmeldung: **16.10.2013**
(21) Anmeldenummer: 13401035.4
(22) Anmeldetag: 10.04.2013
(51) Int. Cl.: E02D 17/02

(54) **Auf den Meeresgrund absenkbares Grundelement für ortsfeste Einrichtungen**

(30) Priorität: 14.04.2012 DE 102012007569; 17.07.2012 DE 102012106432
(71) Anmelder: Löbermann, Matthias, 30625 Hannover (DE)
(72) Erfinder: Löbermann, Matthias, 30625 Hannover (DE)
(74) Vertreter: Scheffler, Jörg

(57) **Zusammenfassung**

Die Erfindung betrifft ein auf einen Grund (3), insbesondere Meeresgrund absenkbares Grundelement für eine ortsfeste Einrichtung (2), insbesondere eine Windenergieanlage, mit einer auf den Grund (3) absenkbaren Bodenfläche (4) und mit einer Basis (5) zur Aufnahme der Einrichtung (2). Das Grundelement ist mit einer auf den Grund (3) des Meeres aufliegenden Bodenfläche (4) ausgestattet, die mit der Basis (5) mittels mehrerer Stützen (6) verbunden ist. Bei der Montage spreizen sich unter dem Einfluss der Schwerkraft die Stützen (6) auf, bis die zwischen ihnen aufgespannte Bodenfläche (4) straff gespannt ist. Zur zusätzlichen Stabilisierung kann das Grundelement mit einer als Geotextilsack ausgeführten taschenförmigen Aufnahme von Sediment als Beschwerung ausgestattet sein, welche durch Zugmittel in der gewünschten Position ausgerichtet ist.

## Beschreibung

Die Erfindung betrifft ein auf einen Grund, insbesondere Meeresgrund absenkbares Grundelement für ortsfeste Einrichtungen, insbesondere Windenergieanlagen, Bauwerke oder Seezeichen, mit einer auf den Grund absenkbaren Bodenfläche und mit einer Basis zur Aufnahme der Einrichtung.

Im Zuge des Bestrebens einer verstärkten und effizienteren Nutzung der Windenergie sind in der jüngeren Vergangenheit zunehmend Windkraftanlagen vor den Küsten geplant oder bereits errichtet worden, und die Bedeutung dieser im Meer erbauten Einrichtungen wird in der Zukunft weiter zunehmen.

Die Errichtung von Offshore-Windkraftanlagen ist bereits vom Grundprinzip her mit größeren Schwierigkeiten verbunden als die Errichtung von Windkraftanlagen an Land, da die notwendigen Komponenten über das Meer an ihren Bestimmungsort transportiert und Installationsarbeiten auf See durchgeführt werden müssen. Um die Anzahl der aufgrund der Umgebungsbedingungen komplizierten und aufwendigen Arbeitsschritte vor Ort möglichst gering zu halten, wird allgemein versucht, größere Baueinheiten bereits an Land zu montieren.

An die Sicherheit der Gründung und die Stabilität des Offshore-Bauwerks müssen zur Gewährleistung einer langfristigen Standsicherheit hohe Anforderungen gestellt werden. In diesem Zusammenhang sind die Wassertiefe und die Kräfte zu berücksichtigen, die durch das Eigengewicht der Einrichtungen sowie Winde, Strömungen und Wellen ausgeübt werden.

Als besonders wirtschaftlich für mittlere Wassertiefen hat sich bislang die sogenannte Monopile- oder Einpfahlgründung erwiesen, bei der ein in der Verlängerung der Turmachse befindlicher Pfahl, in der Regel ein relativ dickwandiges Stahlrohr, im Grund verankert wird. Dieser einzelne Pfahl muss bei großen Windenergieanlagen erhebliche Abmessungen besitzen, beispielweise Durchmesser von über 5 Metern bei Längen von über 30 Metern. Es ist jetzt schon absehbar, dass in naher Zukunft Pfähle in der erforderlichen Größe nicht mehr herstellbar sind.

Die wirtschaftlichste Methode zum Einbringen des Rohres in den Grund ist das Rammverfahren. Bei sandigen Böden ist auch das Spülverfahren bekannt. Bei felsigen Untergründen findet weiterhin das Bohrverfahren Anwendung, bei dem der Monopile abhängig von der Bodenbeschaffenheit wahlweise mit einer betonartigen Masse (grout) in das Bohrloch einzementiert wird.

Insbesondere beim wirtschaftlichen Rammverfahren sind die Abmessungen des Monopiles sowohl im Durchmesser als auch in den Wandstärken durch die zur Verfügung stehenden Rammen, die natürlich erhebliche Ausmaße aufweisen müssen, begrenzt. Außerdem kann ein hohes Gewicht des Monopiles zu unakzeptabel hohem Aufwand bei der Handhabung und dem Transport führen.

Bei größeren Wassertiefen gehören Dreibeingründungen (Tripods) und sogenannte Jackets, vier- oder mehrbeinige, zumeist als Fachwerkkonstruktion ausgeführte Plattformen, als Grundelement zu den bekannten Gründungsmöglichkeiten für Windenergieanlagen. Die Verankerung kann sowohl durch das Eigengewicht als auch durch im Boden verankerte Pfähle erfolgen. Aufgrund des erheblich höheren Stahlverbrauchs sowie der Vielzahl der mit erheblichem Aufwand verbundenen Verankerungspunkte auf dem Meeresgrund sind diese Gründungen jedoch weit weniger wirtschaftlich als der Monopile. Weiterhin stellt die räumliche Ausdehnung unterhalb der Wasseroberfläche ein erhöhtes Risiko für Schiffskollisionen dar.

Mit der Errichtung von Offshore-Windenergieanlagen sind aufgrund der erforderlichen Rammarbeiten unerwünschte Schallemissionen verbunden, welche wesentliche Belastungen für Lebewesen darstellen. Um die Lebewesen, insbesondere geschützte Arten wie beispielsweise Schweinswale und Robben, durch technische Anlagen im Meer, in Hafenbereichen und in anderen Gewässern nicht zu beeinträchtigen, sind Maßnahmen zur Reduktion der Schallemissionen und zur Einhaltung von zulässigen Grenzwerten erforderlich.

Als Alternative sind ferner schwimmende Plattformhüllen verwendet worden, die allgemein unter der Bezeichnung MOAB (Mobile Offshore Application Barge) bekannt und beispielsweise in der EP 2 204 497 A1 beschrieben worden sind. Während des Transports können Teile der Anordnung im Wesentlichen aus dem Wasser angehoben und erst am Installationsort auf den Meeresboden herabgelassen werden. Während der Gründungsarbeiten befindet sich die Plattformhülle im Allgemeinen in einer solchen Zwischenstellung zwischen der beschriebenen ersten und zweiten Stellung, dass sie in der Wasserlinie schwimmt. Aufgrund der zusätzlich erforderlichen Mechanik sind solche Lösungen komplex aufgebaut und fehleranfällig.

Der Erfindung liegt daher die Aufgabe zugrunde, ein Grundelement zu schaffen, welches ein vergleichsweise geringes Eigengewicht aufweist und problemlos zu transportieren ist. Zudem soll eine optimierte Bodenauflage geschaffen werden.

Diese Aufgabe wird erfindungsgemäß mit einem Grundelement gemäß den Merkmalen des Anspruches 1 gelöst. Die weitere Ausgestaltung der Erfindung ist den Unteransprüchen zu entnehmen.

Erfindungsgemäß ist also ein Grundelement vorgesehen, das mit zumindest einer auf dem Untergrund absetzbaren Bodenauflage ausgestattet ist, die ein auf den Grund auflegbares flexibles Flächenmaterial aufweist, welches an mehreren, am Umfang des Flächenmaterials angeordneten, das Flächenmaterial aufspannenden, insbesondere durch einen Rahmen gebildeten Haltepunkten angeordnet ist, wobei das Flächenmaterial beispielsweise an seinen Haltepunkten aus einer Ruheposition in eine Arbeitsposition beweglich ist. Hierdurch wird in überraschend einfacher Weise eine große Auflagefläche auf dem Grund bei einem zugleich geringen Eigengewicht realisiert. Dabei geht die Erfindung von der Überlegung aus, dass das vorzugsweise textile, wasserdurchlässige Flächenmaterial auf dem Grund abgesetzt und mit den in der Umgebung verfügbaren Feststoffen, beispielsweise Sand und Sediment, beschwert werden kann. Hierzu ist das Flächenmaterial für Festkörper ab einer bestimmten Korngröße undurchlässig. In der Praxis lagert sich Sediment auf dem Flächenmaterial ab, welches die Verankerung auf dem Grund weiter verbessert. Entsprechend ausgeformte Taschen können als Aufnahme fester Bestandteile dienen und lassen sich in einfacher Weise beispielsweise während der Montage mit Sand füllen. Anders als die aus dem Stand der Technik bekannten Lösungsvorschläge basiert die vorliegende Erfindung auf dem Gedanken einer flexiblen Anpassung an den Untergrund in Verbindung mit einer großen Auflagefläche, durch die eine Verankerung in dem Grund erreicht wird.

Dabei können die Stützen mit entsprechenden Haltepunkten versehen werden, wenn diese beispielsweise ähnlich einem Schirm relativ zueinander schwenkbeweglich sind, um so eine

Fläche aufzuspannen. Besonders vorteilhaft ist hingegen eine Abwandlung, bei welcher das Flächenmaterial durch zumindest einen Rahmen aufgespannt ist, sodass die Bodenauflage unabhängig von der Position der Stützen aufgespannt werden kann, wobei es von Vorteil sein kann, wenn ein oder mehrere Rahmen abschnittsweise durch eine oder mehrere Stützen oder die Stützen verbindende Streben gebildet ist. Hierdurch werden die auf das Grundelement wirkenden Kräfte direkt in die Bodenauflage eingeleitet, deren Fläche durch die Rahmen entsprechend erweitert ist. Selbstverständlich lässt sich so auch ein modularer Aufbau realisieren, welcher eine nahezu beliebige Erweiterung der Bodenfläche gestattet.

Das Flächenmaterial könnte ähnlich einem Schirm durch bewegliche Streben aufgespannt und in die gewünschte definierte Position gebracht werden. Besonders Erfolg versprechend ist es hingegen, wenn das Grundelement mehrere, jeweils aus einer Ruheposition in eine Arbeitsposition, also in eine horizontale oder gegenüber dieser nur geringfügig geneigte Ebene bewegliche, insbesondere schwenkbewegliche Rahmen aufweist. Hierdurch lassen sich die Stützen unabhängig von dem aufzuspannenden Flächenmaterial in eine Arbeitsposition bringen und auf dem Grund absetzen, während die flächenvergrößernde und die gewünschte Belastbarkeit gewährleistende Bodenfläche durch eine Schwenkbewegung in die vorbestimmte Arbeitsposition realisiert wird. Die Position des Grundelementes kann dadurch gegebenenfalls vergleichsweise problemlos erreicht werden, bevor das Flächenmaterial mit Ballast beaufschlagt und so die Position abschließend festgelegt wird.

Bei einer anderen, ebenfalls besonders Erfolg versprechenden Ausgestaltung der Erfindung sind die Stützen durch mehrere Streben zu einem Fundamentring verbunden, an dem zumindest ein Rahmen radial nach innen oder außen klappbar ausgeordnet ist. Hierdurch können annähernd die gesamte Fläche innerhalb des durch den Fundamentring eingeschlossenen zentralen Bereichs sowie die sich radial nach außen an den Fundamentring anschließenden Bereiche genutzt werden.

Ein wesentlicher Vorteil bei dem Einsatz des Flächenmaterials besteht vor allem auch darin, dass das flexible Flächenmaterial variabel an unterschiedliche Haltepunkte an den Stützen oder dem Rahmen angepasst werden kann.

Selbstverständlich ist das Grundelement nicht auf eine bestimmte Anzahl von Stützen oder Streben beschränkt, jedoch hat es sich bereits als vorteilhaft erwiesen, wenn zumindest drei zueinander geneigt angeordnete Stützen vorgesehen sind, die eine Gitterkonstruktion bilden und gegenüber einer Bodenfläche einen insbesondere übereinstimmenden Winkel einschließen.

Bodenseitig sind die Stützen bzw. die Streben beispielsweise durch einen Fundamentring umfangsseitig oder in einem zentralen Bereich insbesondere sternförmig verbunden. Weiterhin können benachbarte Stützen an ihrem jeweiligen Endabschnitt durch den Fundamentring oder auch durch ein Zugmittel verbunden sein, um so die auftretenden Kräfte aufnehmen zu können und zugleich das Eigengewicht nicht wesentlich zu erhöhen.

Weiterhin hat es sich bereits als besonders nützlich erwiesen, wenn die Stützen mit der Basis jeweils mittels eines Gelenkes einstellbar verbunden sind. Hierdurch lässt sich eine problemlose Ausrichtung der Basis insbesondere in einer horizontalen Ebene erreichen. Beispielsweise sind die Stützen hierzu längeneinstellbar ausgeführt und ermöglichen auch dann die gewünschte Orientierung der Basisebene, wenn der Grund geneigt oder gewölbt ist.

Für eine optimale Ausrichtung bzw. Orientierung des Grundelementes ist es zudem von Vorteil, wenn zumindest eine Stütze zur Ausrichtung der Basis in einer vorbestimmten, insbesondere horizontalen Ebene in Richtung ihrer Haupterstreckung eine einstellbare Länge aufweist.

Die Formgebung der Bodenfläche folgt dabei den jeweiligen örtlichen Gegebenheiten und der zu erwartenden Last auf das Grundelement. Vorzugsweise weist die Bodenfläche eine polygonale Form auf und ist vorzugsweise symmetrisch, je nach zu erwartenden äußeren Krafteinwirkungen auch asymmetrisch in Bezug auf eine Mittelachse zwischen den Stützen positionierbar.

Das Flächenmaterial kann zudem in verschiedenen Bereichen eine abweichende Beschaffenheit aufweisen, um so beispielsweise besonders belastete Bereiche durch Verstärkungen zu schützen. Dabei erweist es sich als besonders praxisnah, wenn das Flächenmaterial aus mehreren Segmenten besteht, die bedarfsweise in den Rahmen einsetzbar oder an diesem austauschbar angeordnet sind.

Die Stabilität des Grundelementes lässt sich in einfacher Weise auch dadurch wesentlich steigern, dass die Bodenfläche zumindest abschnittsweise mittels zumindest eines Bodenankers, insbesondere mit einer Eindringspitze, auf dem Grund fixierbar ist. Hierdurch wird das Grundelement bereits vor dem Ausklappen der das Flächenmaterial tragenden Rahmen mittels der Bodenanker fixiert, sodass eine unerwünschte Verlagerung zuverlässig vermieden wird.

Nach dem Ausklappen der Bodenauflagen werden zumindest einzelne Bodenauflagen oder Stützen mit jeweils zumindest einer Aufnahme, insbesondere mit einem schlauchartigen Geotextilsack, für eine insbesondere unabhängige Ballastzuführung ausgestattet, um die Basis in einer vorbestimmten, insbesondere horizontalen Ebene auszurichten und die Standsicherheit entsprechend zu erhöhen.

Dabei hat es sich bereits als besonders nützlich erwiesen, wenn das Grundelement aus einer Transportposition, in welcher zumindest einzelne Stützen im Wesentlichen benachbart zueinander angeordnet sind, in eine Gebrauchsposition beweglich ist, in welcher die Stützen in eine gespreizte Position verschwenkt sind. Hierdurch kann das Transportvolumen minimiert werden.

Weiterhin ist es besonders zweckmäßig, wenn das Grundelement aus der Transportposition in die Gebrauchsposition durch die Einwirkung einer Hubkraft, insbesondere einer Auftriebskraft, beweglich ist, sodass sich das Grundelement unter der Einwirkung der Auftriebskraft nahezu selbsttätig in der vorbestimmten Gebrauchsposition ausrichtet.

Darüber hinaus kann das Grundelement ein insbesondere lösbar mit dem Grundelement verbundenes Auftriebselement mit einstellbarer Auftriebskraft aufweisen, um die gewünschte Orientierung des Grundelementes beispielsweise durch Luftzuführung zu dem Auftriebselement einstellen zu können. Hierzu kann das Auftriebselement mit einem flexiblen und/oder elastischen, mit einem Gas, insbesondere Druckluft beaufschlagbaren Auftriebskörper oder mit einem Hohlkörper mit einstellbarem Volumen ausgestattet sein. Beispielsweise kann das Auftriebselement mehrere, in Richtung der Längserstreckung zwischen der Bodenfläche und der Basis angeordnete, unabhängig mit einer einstellbaren Auftriebskraft beaufschlagbare Auftriebselemente aufweisen.

Die maximal einstellbare Auftriebskraft des Auftriebselementes kann das Eigengewicht des Grundelementes übersteigen, um so eine Schwimmfähigkeit des Grundelementes zu erhalten. Auf diese Weise kann das Grundelement beispielsweise bis zu der vorbestimmten Absetzposition geschleppt und dort abgesenkt werden. Durch eine sinnvolle Anordnung mehrerer Auftriebselemente kann das Grundelement durch Veränderung der Auftriebskraft eines oder mehrerer Auftriebselemente ausgehend von einer im Wesentlichen horizontal schwimmenden Orientierung in eine im Wesentlichen vertikal schwimmende und/oder abgesenkte Orientierung gebracht werden. Hierzu ist insbesondere die minimal einstellbare Auftriebskraft gleich oder geringfügig größer als das Eigengewicht des Auftriebselementes. Bei einer anderen, ebenfalls besonders zweckmäßigen Ausgestaltung der Erfindung ist das Grundelement mit einem Zusatzgewicht beaufschlagbar, welches vorzugsweise an der Basis abstützbar ist, um so die Stabilität des Grundelementes bedarfsweise zu erhöhen.

Obwohl es sich bereits als besonders zweckmäßig erwiesen hat, wenn die Basis deutlich oberhalb der Wasserlinie liegt, sind auch Varianten nicht grundsätzlich ausgeschlossen, bei denen die Basis unterhalb der Wasserlinie ausgerichtet werden kann.

Im Gegensatz zur konventionellen Methode der Installation erfordert das erfindungsgemäße Grundelement aufgrund der Bodenauflage aus dem flexiblen Flächenmaterial einen wesentlich geringeren Aufwand. Die wesentlichen Vorteile liegen insbesondere in der geringeren Lärmentwicklung bei der Montage und der sicheren Standfestigkeit der Konstruktion. Zudem kann das Grundelement auf nahezu allen Untergründen installiert werden und benötigt grundsätzlich keine Vorbereitung des Grundes. Die Methodik der Installation ist einfach und kann durch jedes erfahrene Vertragsunternehmen der Branche mit dem vorhandenen Know-how durchgeführt werden.

Mit dem erfindungsgemäßen Grundelement ist eine vollkommen neue, gegenüber dem Stand der Technik wirtschaftlichere und umweltschonendere Lösung geschaffen worden, die viele Probleme der Fundamentinstallation insbesondere in Bezug auf Wirtschaftlichkeit, Genehmigungsfragen, Belastbarkeit von Baugrunderkundungen und Umweltverträglichkeit löst.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig. 1 bis 6: einzelne Schritte bei der Errichtung einer ersten Variante des erfindungsgemäßen Grundelementes;
- Fig. 7 bis 16: die Arbeitsschritte bei der Errichtung einer mit Auftriebselementen ausgestatteten Variante eines erfindungsgemäßen Grundelementes;
- Fig. 17: eine Seitenansicht einer weiteren Variante eines Grundelementes mit an beweglichen Rahmen angeordnetem Flächenmaterial;

- Fig. 18: eine Draufsicht auf das in der Figur 18 gezeigte Grundelement.

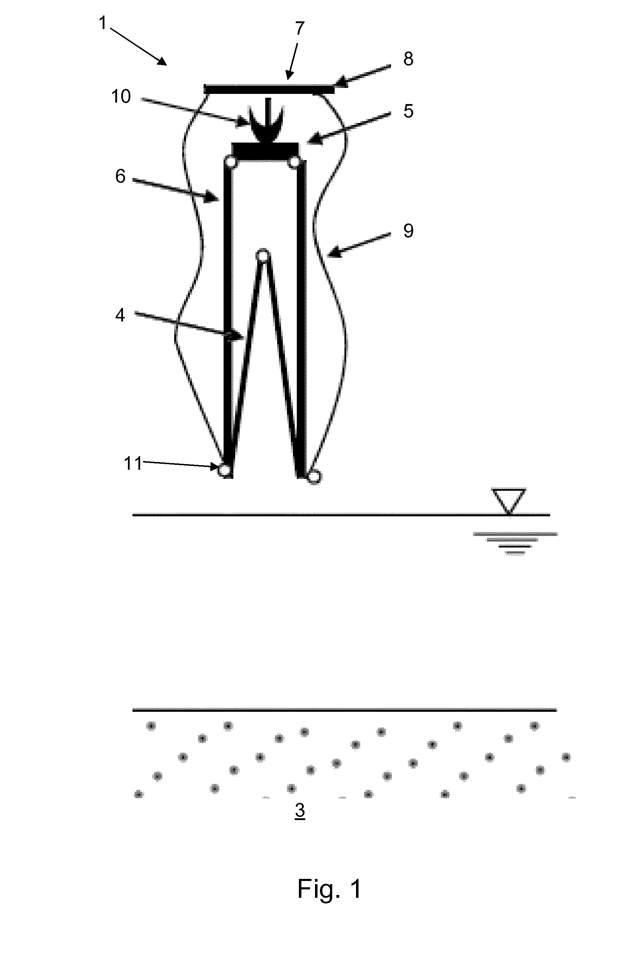

In den Figuren 1 bis 6 ist eine erste Variante eines auf den Grund 3 des Meeres unterhalb einer Wasseroberfläche absenkbaren Grundelementes 1 für eine als Windenergieanlage ausgeführte ortsfeste Einrichtung 2 dargestellt. Das Grundelement 1 ist mit einer auf den Grund 3 des Meeres absenkbaren Bodenfläche 4 ausgestattet, die mit einer die Einrichtung 2 tragenden Basis 5 mittels mehrerer Stützen 6 verbunden ist. In Figur 1 ist eine Transportposition dargestellt, in der das Grundelement 1 mittels einer Transportvorrichtung 7 umfassend eine Ringtraverse 8 sowie ein durch Zugmittel 9 realisiertes Hebezeug gehalten ist. Das unerwünschte Absenken der Basis 5 wird durch ein Verbindungselement 10 vermieden, sodass die Traglast von der Basis 5 direkt in die Ringtraverse 8 eingeleitet werden kann.

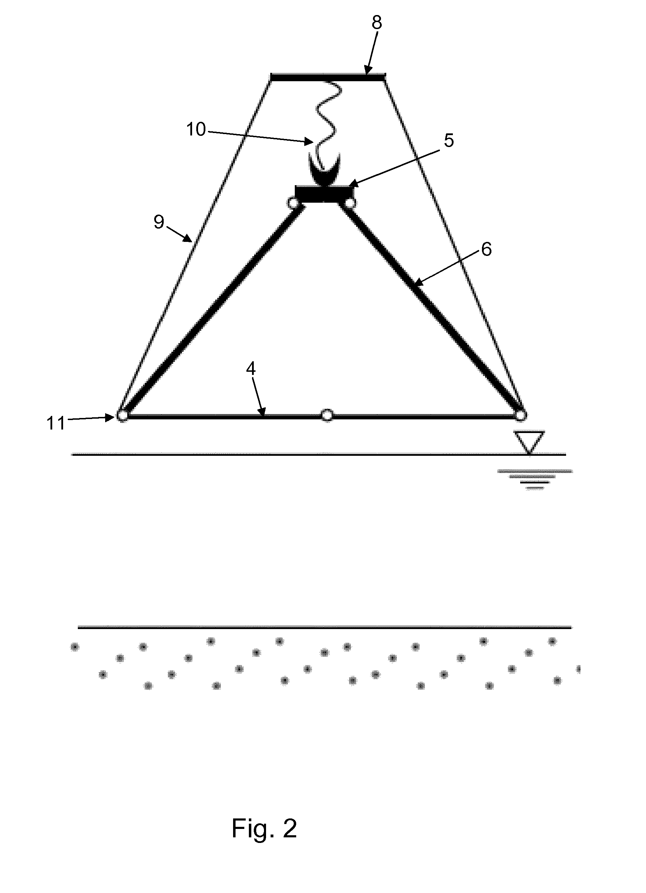

Nach dem Lösen des Verbindungselementes 10 wird die Last mittels des Hebezeuges in die Ringtraverse 8 eingeleitet, wobei das Hebezeug lösbar an dem unteren Endabschnitt 11 der Stützen 6 fixiert ist. Wie in Figur 2 erkennbar, spreizen sich unter dem Einfluss der Schwerkraft die Stützen 6 auf, bis die zwischen ihnen aufgespannte Bodenfläche 4 straff gespannt ist.

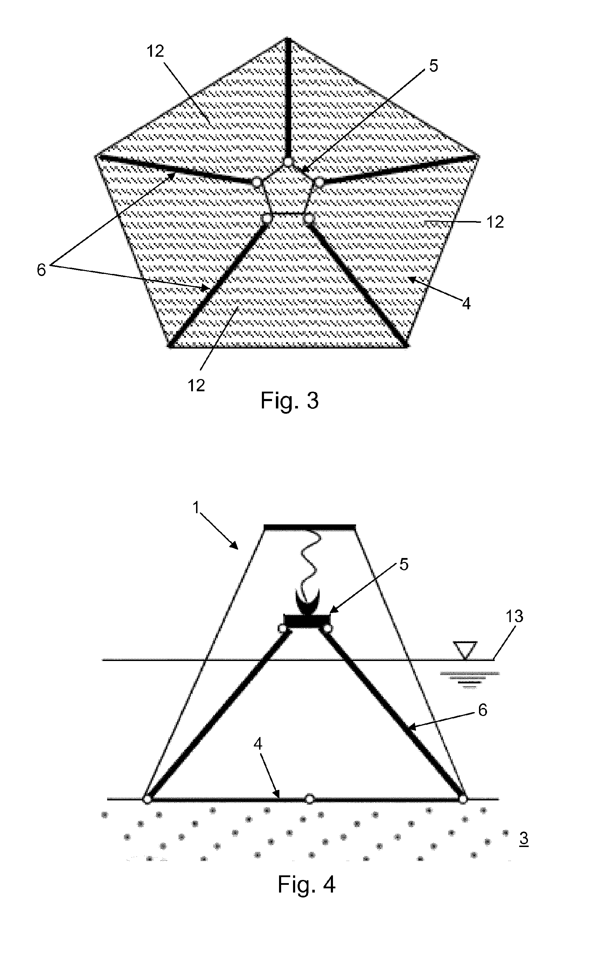

Figur 3 zeigt diese Arbeits- oder Gebrauchsposition in einer Draufsicht, in der auch die einzelnen, die Bodenfläche 4 bildenden trapezförmigen Flächenmaterialien 12 zwischen den Stützen 6 zu erkennen sind.

Figur 4 verdeutlicht die bereits mit der Bodenfläche 4 auf dem Grund 3 aufliegende Gebrauchsposition des Grundelementes 1, in welcher die Basis 5 deutlich oberhalb der Oberfläche der Wasserlinie 13 liegt.

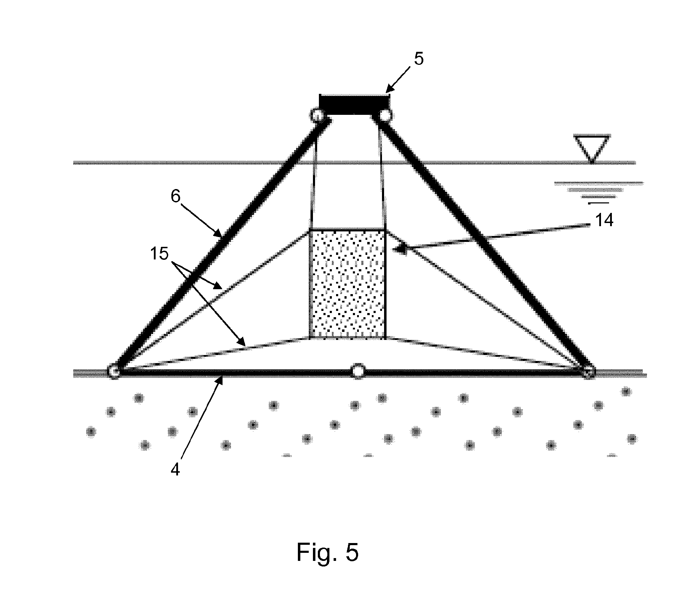

Zur zusätzlichen Stabilisierung kann das Grundelement 1 mit einer als Geotextilsack ausgeführten taschenförmigen Aufnahme 14 von Sediment als Beschwerung ausgestattet sein, welche durch Zugmittel 15 in der gewünschten Position ausgerichtet ist. Eine solche Position ist in Figur 5 zu erkennen.

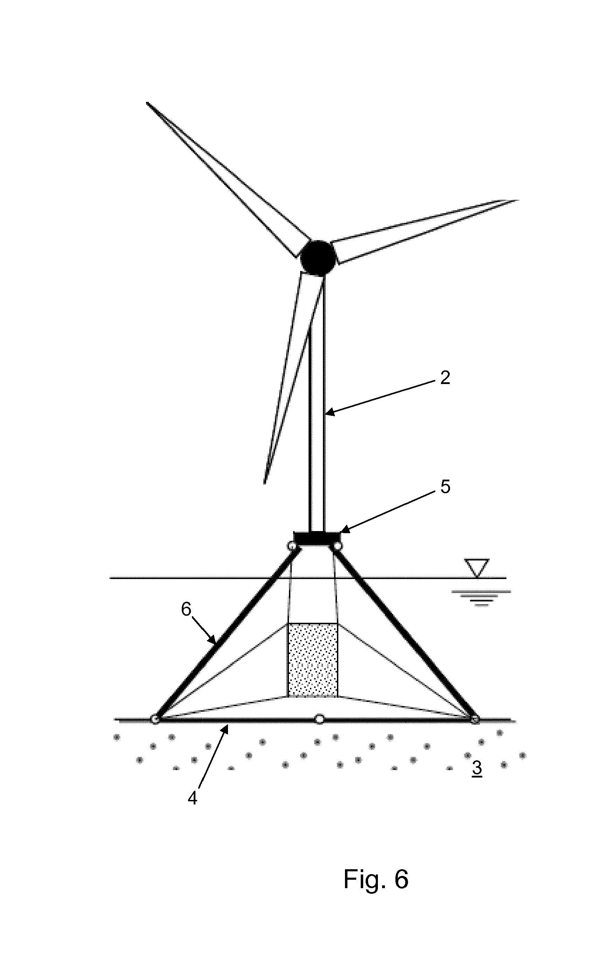

Die abschließende Montage der Einrichtung 2 erfolgt dann in einer an sich bekannten Weise auf der Basis 5. In Figur 6 ist lediglich beispielhaft eine Windenergieanlage als Einrichtung 2 dargestellt.

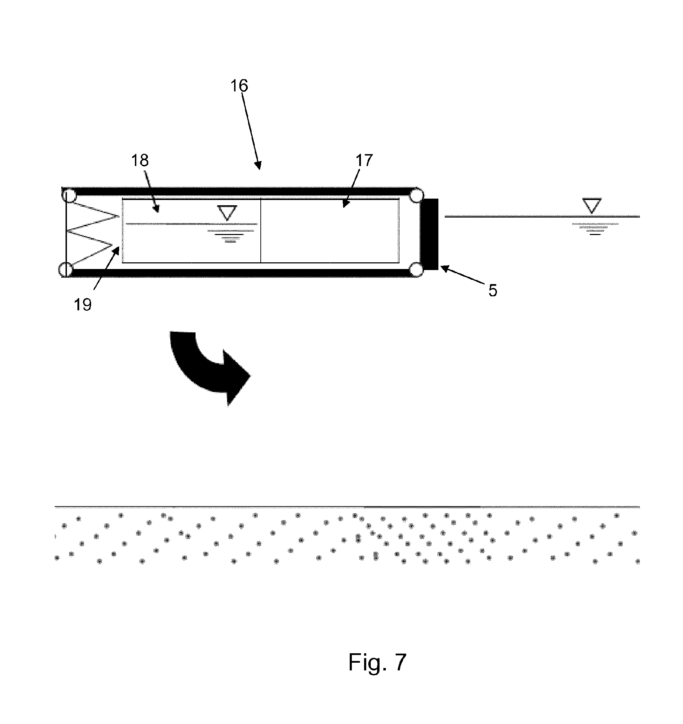

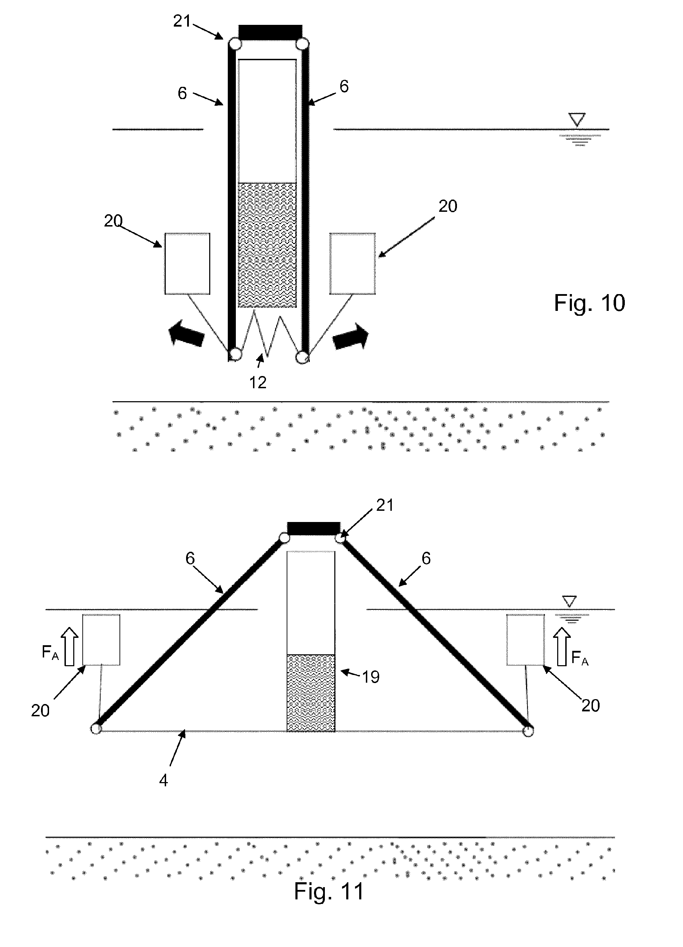

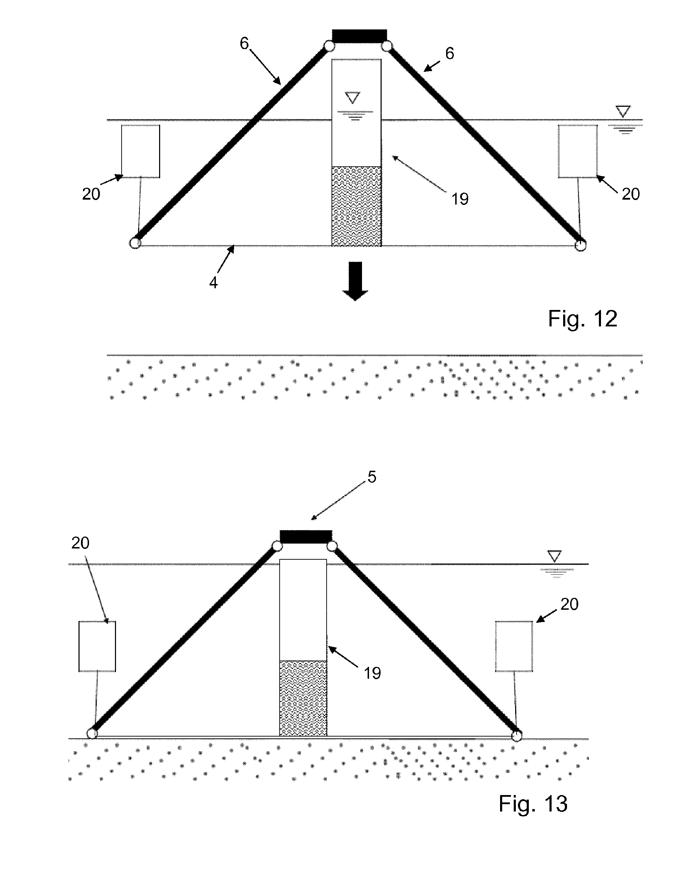

In den Figuren 7 bis 16 ist ergänzend noch eine Variante eines Grundelementes 16 dargestellt, bei der auf einen Kran zum Transport und zur Positionierung des Grundelementes 16 verzichtet werden kann. Vielmehr ist das Grundelement 16, welches dem in den Figuren 1 bis 6 gezeigten konstruktiven Aufbau teilweise entspricht, mit einem aus einer der Basis 5 zugewandten ersten Kammer 17 und einer der Bodenfläche 4 zugewandten zweiten Kammer 18 bestehenden Auftriebselement 19 ausgestattet. Die beiden Kammern 17, 18 sind während des Transportes mit Luft gefüllt und erzeugen dadurch einen für die Schwimmfähigkeit des Grundelementes 16 ausreichenden Auftrieb.

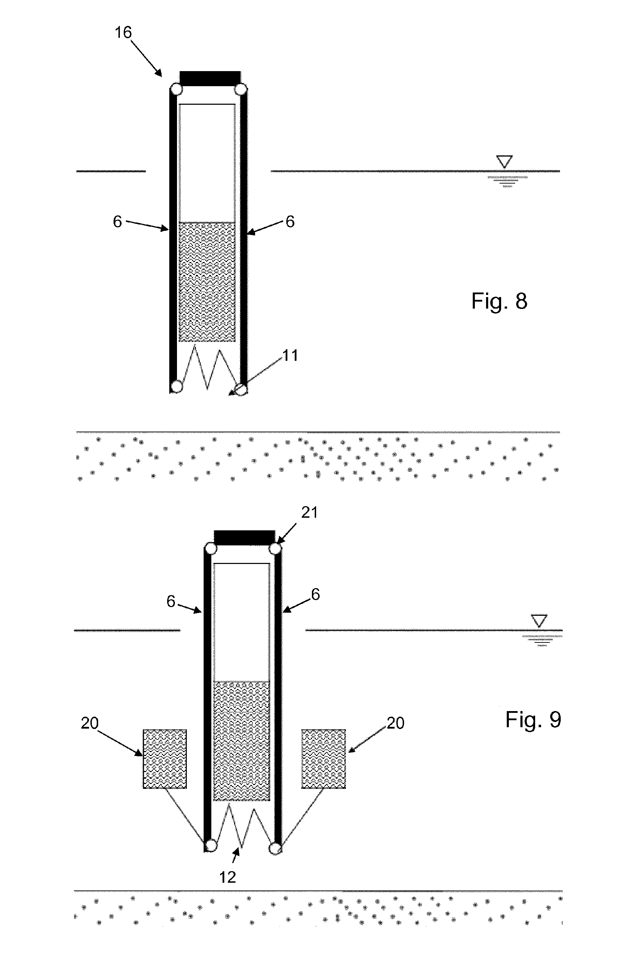

Wie in Figur 7 zu erkennen, wird bei Erreichen der Zielposition die zweite Kammer 18 langsam geflutet, sodass der verbleibende Auftrieb der ersten Kammer 17 zu einem das Grundelement 16 aufrichtenden Drehmoment führt. In Figur 8 ist eine dementsprechende vertikale, schwimmende Position des Grundelementes 16 dargestellt.

Wie in den Figuren 8 bis 13 gezeigt, werden die Stützen 6 an ihren der Bodenfläche 4 zugewandten Endabschnitten 11 jeweils mit einem Auftriebselement 20 verbunden, welches langsam mit Luft gefüllt wird und so einen zunehmenden Auftrieb F_{A} erzeugt. Dadurch führen die mittels eines Gelenkes 21 mit der Basis 5 verbundenen Stützen 6 eine Schwenkbewegung aus, bis das die Bodenfläche 4 bildende Flächenmaterial 12 zwischen den Stützen 6 gespannt ist.

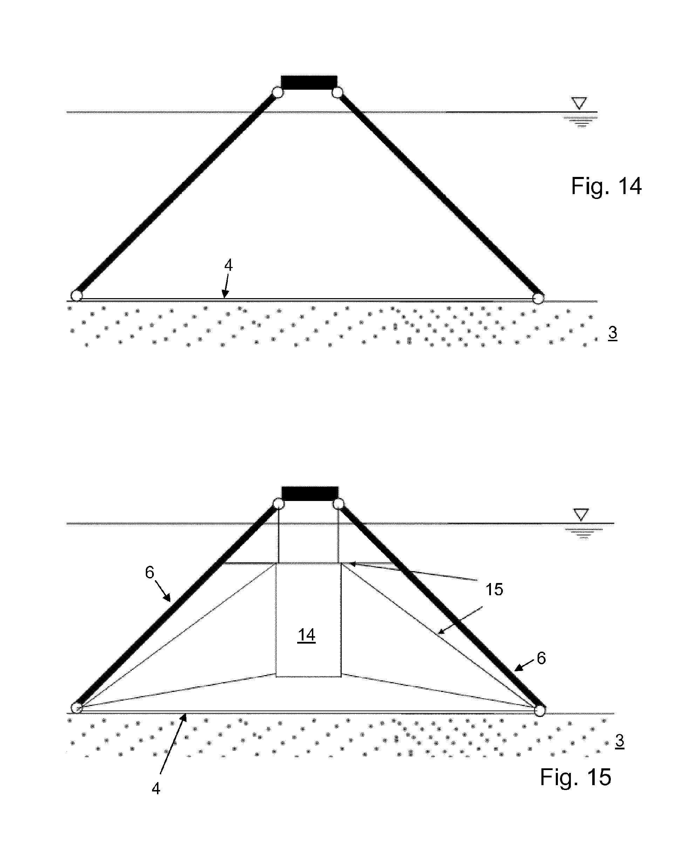

Das Absenken auf den Grund 3 wird anschließend eingeleitet, indem auch die zweite Kammer 18 langsam geflutet wird, bis das Grundelement 16 unter dem Einfluss des Eigengewichtes auf den Grund 3 absinkt. Die Auftriebselemente 19, 20 sind hierzu derart bemessen, dass deren Auftriebskraft F_{A} geringer als die Gewichtskraft des Grundelementes 16 ist und diese daher erst nach der erfolgreichen Positionierung auf dem Grund 3 entfernt werden, wie dies in den Figuren 14 bis 16 zu erkennen ist.

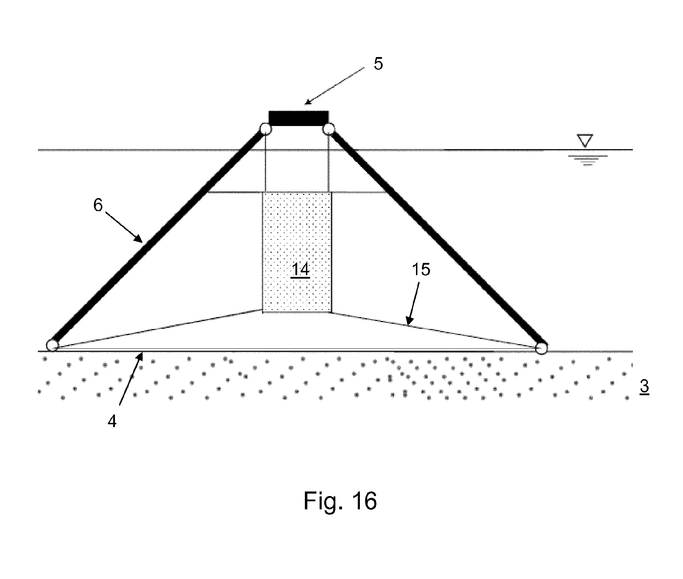

Abschließend werden die Kammern 17, 18 oder alternativ die an ihrer Stelle angebrachte, mit Verspannungen fixierte taschenförmige Aufnahme 14 mit Sediment gefüllt, um so die Gewichtskraft zu erhöhen, wie dies in den Figuren 15 und 16 erkennbar ist.

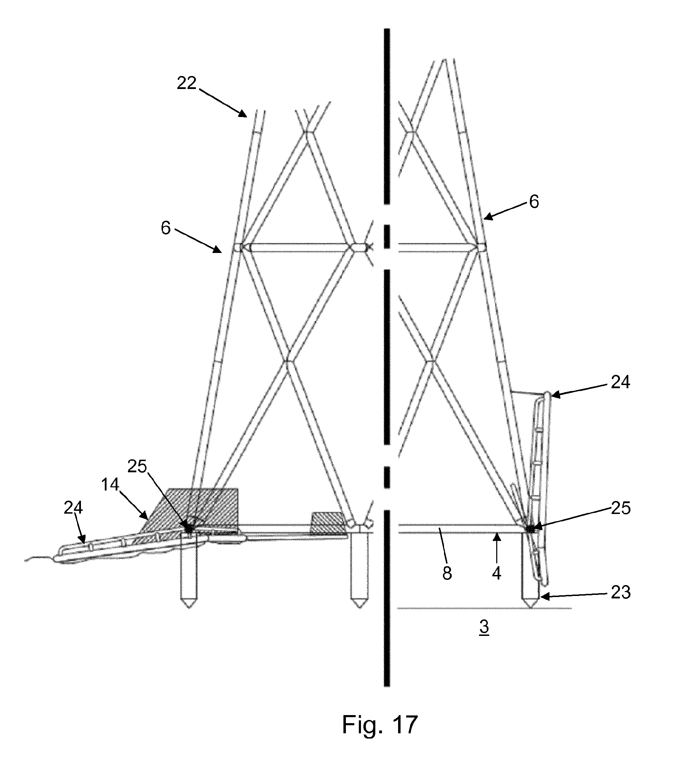

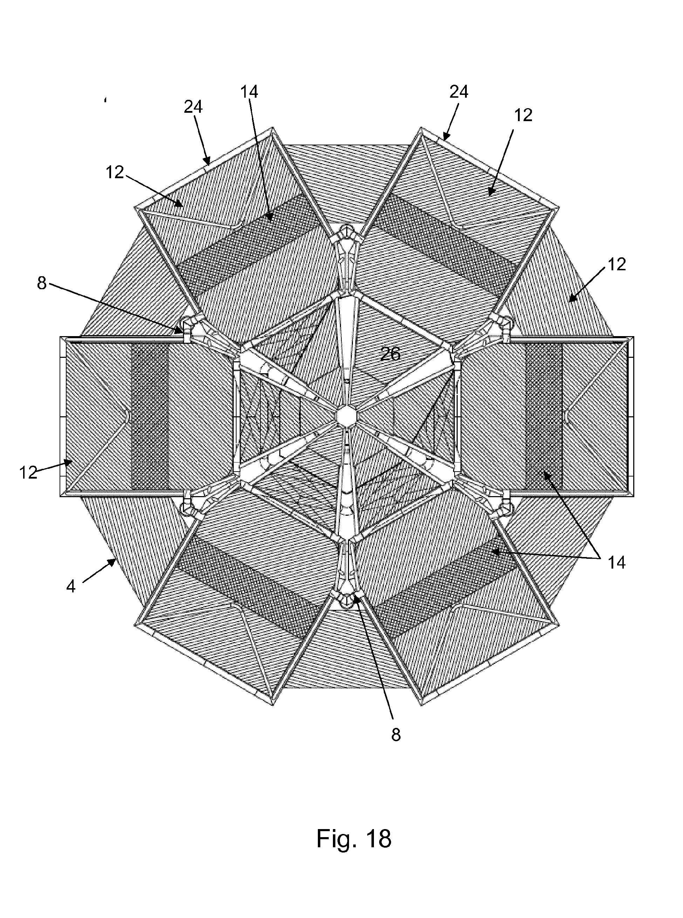

Eine weitere Variante eines erfindungsgemäßen Grundelementes 22, welches ohne relativ zueinander verschwenkbare Stützen 6 auskommt, wird nachstehend noch anhand der Figuren 17 und 18 näher dargestellt. Diese zeigen ein auf einer sechseckigen Geometrie aufbauendes Grundelement 22 mit mehreren, aus Stahlrohren aufgebauten Stützen 6. Äußere Krafteinwirkungen werden über ein System aus Kreuzstreben abgeleitet, die durch Ringe zusammengehalten werden. Die daraus gebildete Gitterkonstruktion verteilt die Lasten so effektiv, dass vergleichsweise dünnwandige Stahlrohre zur Anwendung kommen können. Das Grundelement 22 ist mit einer Bodenfläche 4 ausgestattet, welche zur verbesserten Befestigung mehrere als Rammpfähle ausgeführte Bodenanker 23 aufweist. Durch den geringen Durchmesser entstehen beim Einschlagen lediglich sehr geringe Geräuschemissionen. Die wesentliche Haltefunktion wird jedoch durch die Bodenfläche 4 erreicht, die aus einem Flächenmaterial 12 der Materialgruppe der sogenannten Geotextilien aufgebaut ist. Das hier verwendete Flächenmaterial 12 ist je nach Einsatzzweck der verfügbaren Geotextilien durchlässig für Wasser oder auch für das Wurzelwerk von Gräsern und anderer Pflanzen, jedoch undurchlässig für Sediment, Sand oder andere Feststoffe definierter Korngrößen. Pflanzen unterstützen zudem die Verfestigung sehr weicher wasserhaltiger Böden und Schlämme oder die Separation des Wassers. Wesentliche Vorteile des geotextilen Flächenmaterials 12 liegen in der Möglichkeit zur individuellen Anpassung an unterschiedliche Einsatzzwecke sowie in der modularen Erweiterbarkeit. An den Seiten des Grundelementes 22 sind hierzu ausklappbare Rahmen 24 vorgesehen. Diese sind an Gelenken 25 schwenkbeweglich angeordnet, die an der unteren Ringtraverse 8 angebracht sind. Die Rahmen 24 werden mit dem Textilgewebe als Flächenmaterial 12 bespannt, welches eine hohe Festigkeit aufweist, jedoch nicht straff gespannt sein muss. Die Rahmen 24 sind so geformt, dass sie sich auch auf der inneren Seite der Ringtraverse 8 fortsetzen. Dort sind zusätzliche Rahmen 26 an der Ringtraverse 8 angebracht, um auch den inneren Bereich vollständig abzudecken. Zwischen den Rahmen 26 sind ebenfalls Lagen aus dem Flächenmaterial 12 angebracht, die erst dann relativ straff gespannt werden, wenn die Rahmen 24, 26 ausgeklappt sind. Die von dem Grundelement 22 überdeckte Grundfläche wird damit um ein Vielfaches vergrößert. Indem die Flächenmaterialien 12 der Rahmenbespannung so beschaffen sind, dass sie zwar wasserdurchlässig sind, aber von Sand oder Schlamm nicht durchdrungen werden können, ist sichergestellt, dass die Wasserbewegungen im Zuge des Installationsprozesses und später eintretende Meeresströmungen kein Auskolken bewirken können.

Auf den Rahmen 24, 26 sind im Bereich der Ringtraverse 8 sechs große taschenförmige Aufnahmen 14 fixiert. Diese werden im Zuge der Installation mit bis zu mehreren 100 Tonnen Sand pro Aufnahme 14 gefüllt, der durch das Gewebe innerhalb der Aufnahmen 14 zurückgehalten wird, während das zu seiner Förderung notwendige Spülwasser durch das Gewebe nach außen freigesetzt wird. Der Sand verfestigt sich dadurch erheblich und bildet eine beständige kompakte Masse, die durch die Aufnahmen 14 vor Ausspülung durch Strömungen geschützt ist. Die Kombination der großen bedeckten Bodenfläche 4 und der Gewichtsbelastung durch den später eingefüllten Sandballast ermöglicht es, ein leicht transportables und nach der Ballastzuführung äußerst standfestes Grundelement 22 zu schaffen.

Der Installationsvorgang wird hierzu folgendermaßen durchgeführt: Zunächst wird das Grundelement 22 durch ein Kranschiff mit noch eingeklappten Rahmen 24, 26 zum Meeresgrund abgesenkt. Der Vorgang wird kurz vor dem Erreichen des Meeresgrundes unterbrochen. Die Arretierung der Rahmen 24, 26 wird anschließend gelöst und die Rahmen 24, 26 klappen durch ihr Eigengewicht und gegebenenfalls unterstützt durch ein nicht gezeigtes Federelement aus und erreichen so die vorbestimmte Stellung. Anschließend wird das Grundelement 22 auf dem Meeresgrund abgesetzt. Das Grundelement 22 dringt mit den Bodenankern 23 in den Grund 3 ein, bis die Rahmen 24, 26 auf dem Meeresgrund aufliegen. Die Bodenfläche 4 liegt mit ihrem Flächenmaterial 12 auf der Deckschicht des Meeresbodens auf. Durch unter hohem Druck über Schläuche unter die Gewebelagen gepumptes Meerwasser wird Schlamm der Deckschicht weggespült, bis die Gewebelagen des Flächenmaterials 12 auf dem Meeresgrund aufliegen. Dabei dringt das Wasser auch durch das Flächenmaterial 12 nach außen, wobei Feststoffe zurückgehalten werden. Zum Höhenausgleich und zur Bodenaufwertung kann optional ein Sand-Wasser-Gemisch unter die Bodenfläche 4 eingespült werden. Nach dem Spülvorgang werden die inneren Rahmen 26 durch die Bodenanker 23 fixiert, indem diese mit ihren Spitzen in den Meeresgrund eindringen. Seine Haftreibung im Meeresgrund und sein Eigengewicht reichen zur Fixierung aus. Nach dem Ausspülen des Schlammes wird das Grundelement 22 endgültig ausgerichtet, indem ein nicht gezeigter Rüttlerkopf gezielt an zu weit emporragenden Eckpunkten auf dem unteren Fundamentring aufgesetzt wird und auf diesen einwirkt, bis die gewünschte Einsinktiefe erreicht ist. Die zur Aufnahme des Sedimentes bestimmten taschenförmigen Aufnahmen 14 werden durch Sandpumpen über Schläuche gefüllt. Das im gespülten Sand enthaltene Wasser dringt durch die Poren des gewebeartigen textilen Flächenmaterials 12 nach außen. Weiteres Sediment und Sand wird über den Lagen des Flächenmaterials 1 innerhalb und außerhalb des Fundamentringes zur Bildung einer Deckschicht verteilt. Das Grundelement 22 wird nun eine Weile sich selbst überlassen, bis es sich endgültig gesetzt haben wird. Bei der Nachkontrolle durch ein kleineres Arbeitsschiff kann nötigenfalls erneut der Rüttler eingesetzt werden, um weitere Korrekturen auszuführen. Das eingespülte Sediment und Sand sind nach der Setzphase so weit vom Wasser befreit, dass diese eine kompakte Masse bilden. Diese vermindert wesentlich eine denkbare Tendenz des Grundelementes 22, sich unter äußerem Einfluss plastisch zu verformen. Im Laufe der Zeit lagert sich weiterer Sand durch die vorherrschenden Tidenströmungen auf der Oberseite des Flächenmaterials 12 ab. Zudem ist bereits beobachtet worden, dass derartige Offshore-Grundelemente 22 ähnlich künstlichen Riffen die Ansiedlung von Muscheln und auch Fischen anregen. Diese Tendenz kann durch die gezielte Ansiedlung von Miesmuscheln oder Austern gefördert werden, die mit ihren biologischen Haftstoffen bereits nach kurzer Zeit eine weitere Deckschicht ausbilden können und so zur Festigkeit der Anordnung erheblich beitragen können. Die im Meeresboden eingesunkenen Rahmenteile werden zum Schutz gegen äußere Einflüsse bei ihrer Herstellung mit einer isolierenden Kunststoffmasse beschichtet. Zudem verhindert das umgebende Sediment einen unmittelbaren Kontakt mit bewegtem Wasser, welches durch die Zufuhr von Sauerstoff zu Korrosion führen könnte.

## Patentansprüche

1. Ein auf einen Grund (3), **insbesondere Meeresgrund absenkbares Grundelement (1, 16,** 22) für ortsfeste Einrichtungen (2), insbesondere Windenergieanlagen, Bauwerke oder Seezeichen, mit einer auf den Grund (3) absenkbaren Bodenfläche (4) und mit einer Basis (5) zur Aufnahme der Einrichtung (2), **wobei das Grundelement (1, 16, 22) mehrere die** Bodenfläche (4) mit der Basis (5) verbindende Stützen (6) hat, **dadurch gekennzeichnet, dass** das Grundelement (1, 16, 22) mit **zumindest einer auf dem Grund (3) absetzbaren** Bodenfläche (4) ausgestattet ist, die ein auf den Grund (3) auflegbares flexibles Flächenmaterial (12) aufweist, welches an mehreren, am Umfang des Flächenmaterials (12) angeordneten, das Flächenmaterial (12) aufspannenden Haltepunkten angeordnet ist.

2. Grundelement (1, 16, 22) **nach Anspruch 1, dadurch gekennzeichnet, dass das** Flächenmaterial (12) durch zumindest einen Rahmen (24, 26) aufgespannt ist.

3. Grundelement (1, 16, 22) **nach Anspruch 2, dadurch gekennzeichnet, dass** zumindest ein Rahmen (24, 26) zumindest abschnittsweise durch eine oder mehrere Stützen (6) und/oder die Stützen (6) verbindende Streben gebildet ist.

4. Grundelement (1, 16, 22) nach zumindest einem der vorhergehenden Ansprüche, **dadurch gekennzeichnet, dass** das Grundelement (22) **mehrere, jeweils aus einer** Ruheposition in eine Arbeitsposition, also in eine horizontale oder gegenüber dieser nur geringfügig geneigte Ebene bewegliche, insbesondere schwenkbewegliche Rahmen (24, 26) aufweist.

5. Grundelement (1, 16, 22) nach zumindest einem der vorhergehenden Ansprüche, **dadurch gekennzeichnet, dass** die Stützen (6) durch mehrere Streben zu einer Ringtraverse (8) verbunden **sind und dass an der** Ringtraverse **(8) die Rahmen (24, 26)** beweglich, insbesondere schwenkbeweglich angeordnet sind.

6. Grundelement (1, 16, 22) nach zumindest einem der vorhergehenden Ansprüche, **dadurch gekennzeichnet, dass** die Stützen (6) mit der Basis (5) jeweils mittels eines Gelenks (21) verbunden sind.

7. Grundelement (1, 16, 22) nach zumindest einem der vorhergehenden Ansprüche, **dadurch gekennzeichnet, dass** das flexible Flächenmaterial (12) von den Stützen (6) und/oder zumindest einem Rahmen (24, 26) aufgespannt ist.

8. Grundelement (1, 16, 22) nach zumindest einem der vorhergehenden Ansprüche, **dadurch gekennzeichnet, dass** die Bodenfläche (4) eine polygonale Form aufweist.

9. Grundelement (1, 16, 22) nach zumindest einem der vorhergehenden Ansprüche, **dadurch gekennzeichnet, dass** das Flächenmaterial (12) aus mehreren Segmenten besteht, die bedarfsweise in den Rahmen (24, 26) einsetzbar und/oder austauschbar angeordnet sind.

10. Grundelement (1, 16, 22) nach zumindest einem der vorhergehenden Ansprüche, **dadurch gekennzeichnet, dass** die Bodenfläche (4) zumindest abschnittsweise mittels zumindest eines Bodenankers (23) auf dem Grund (3) fixierbar ist.

11. Grundelement (1, 16, 22) nach zumindest einem der vorhergehenden Ansprüche, **dadurch gekennzeichnet, dass** zumindest eine Stütze (6) zur Ausrichtung der Basis (5) in einer vorbestimmten, insbesondere horizontalen Ebene in Richtung ihrer Haupterstreckung eine einstellbare Länge aufweist.

12. Grundelement (1, 16, 22) nach zumindest einem der vorhergehenden Ansprüche, **dadurch gekennzeichnet, dass** das Grundelement (1, 16, 22) mit einer taschenförmigen Aufnahme (14) aus einem textilen Flächenmaterial (12) zur Aufnahme von Sediment, Sand, Kies oder dergleichen als Zusatzgewicht ausgestattet ist.

13. Grundelement (1, 16, 22) nach zumindest einem der vorhergehenden Ansprüche, **dadurch gekennzeichnet, dass** das Grundelement (1, 16, 22) aus der Transportposition in die Gebrauchsposition durch die Einwirkung einer Hubkraft, insbesondere einer Auftriebskraft (F_{A}) beweglich ist.

14. Grundelement (1, 16, 22) nach zumindest einem der vorhergehenden Ansprüche, **dadurch gekennzeichnet, dass** das Grundelement (1, 16, 22) ein insbesondere lösbar mit dem Grundelement (1, 16, 22) verbundenes Auftriebselement (19, 20) mit einstellbarer Auftriebskraft (F_{A}) aufweist.

15. Grundelement (1, 16, 22) nach zumindest einem der vorhergehenden Ansprüche, **dadurch gekennzeichnet, dass** das Auftriebselement (19, 20) einen flexiblen und/oder elastischen, mit einem Gas, insbesondere Druckluft beaufschlagbaren Auftriebskörper aufweist.

16. Grundelement (1, 16, 22) nach zumindest einem der vorhergehenden Ansprüche, **dadurch gekennzeichnet, dass** das Auftriebselement (19, 20) einen Hohlkörper mit einstellbarem Volumen aufweist.

17. Grundelement (1, 16, 22) nach zumindest einem der vorhergehenden Ansprüche, **dadurch gekennzeichnet, dass** die maximal einstellbare Auftriebskraft (F_{A}) des Auftriebselementes (19, 20) das Eigengewicht des Grundelementes (1, 16, 22) übersteigt.

18. Grundelement (1, 16, 22) nach zumindest einem der vorhergehenden Ansprüche, **dadurch gekennzeichnet, dass** die minimal einstellbare Auftriebskraft (F_{A}) geringer ist als das Eigengewicht des Grundelementes (1, 16, 22).

19. Grundelement (1, 16, 22) nach zumindest einem der vorhergehenden Ansprüche, **dadurch gekennzeichnet, dass** das Grundelement (1, 16, 22) mit einer taschenförmigen Aufnahme (14) aus einem textilen Flächenmaterial (12) zur Aufnahme von Sediment, Sand, Kies oder dergleichen als Zusatzgewicht ausgestattet ist.
